# EUROPEAN PATENT SPECIFICATION

(11) **EP 1 971 660 B1**
(45) Date of publication and mention of the grant of the patent: **21.07.2010**
(21) Application number: 06809900.1
(22) Date of filing: 27.03.2006
(51) Int. Cl.: C09J 7/02, G06F 3/02

(54) **HEAT SENSITIVE, SOLVENT SENSITIVE, TEMPER EVIDENT, MULTIPURPOSE SECURITY LABEL AND THE METHOD OF MANUFACTURING THE SAME**
WÄRMEEMPFINDLICHES, LÖSUNGSMITTELEMPFINDLICHES MEHRZWECKSICHERHEITSETIKETT, DAS UNERLAUBTES ÖFFNEN OFFENKUNDIG ANZEIGT, SOWIE HERSTELLUNGSVERFAHREN DAFÜR
ETIQUETTE DE SECURITE POLYVALENTE SENSIBLE A LA CHALEUR, SENSIBLE AUX SOLVANTS ET INVIOLABLE, AINSI QUE SON PROCEDE DE FABRICATION

(30) Priority: 27.12.2005 IN MU16252005
(43) Date of publication of application: 24.09.2008
(73) Proprietor: Prs Solutions Private Limited, Mumbai 400 001 MAH (IN)
(72) Inventor: MANNA, Prafulla, Kumar, Maharashtra State (IN); SHENOY, Nityananda, Shekar, Maharashtra State (IN); SHROFF, Pradip, Hiralal, Maharashtra State (IN)
(74) Representative: Dörries, Hans Ulrich
(86) International application number: PCT/IN2006/000126
(87) International publication number: WO 2007/074470

(56) References cited:
- EP-A- 1 179 577
- DE-A1- 1 594 191
- US-A1- 2002 191 234

## Description

### SUMMARY OF THE INVENTION

Fraudsters are a constant source of grave concern to brand owners since they are involved in counterfeit, retail theft, parallel trading, brand piracy and product tampering. Billions of dollars are invested every year in building reputed brands and the importance for protecting the same against the ever present threat posed by counterfeiters and forgers is increasingly being recognized. A huge sum of money is invested in promoting and building a brand through extensive painstaking and complex marketing plans and goes down the drain due to brand piracy. The recent breed of fraudsters are armed with sophisticated manufacturing and detecting equipments coupled with enhanced technical knowledge. Hence, in the light of these facts, the traditional security measures adopted by brand owners are of little help in the current scenario. The need of the hour is a foolproof solution to curb this menace.

As a positive step towards providing a solution to tackle this issue a method is developed of using a unique label to prevent this illegal activity. The present invention provides a "guaranteed" solution to brand owners, various industries manufacturing their products, components, parts, assemblies and users of such products, instruments such as energy meters etc. to safeguard their brands by curbing pilferage and vandalism by counterfeiters and subsequently avoid massive revenue losses. This product offers a perfect balance of advanced effectiveness versus the cost for the same.

In one embodiment the invention relates to a method of manufacturing "heat sensitive, solvent sensitive, tamper evident multi purpose security label (SURECOM)" comprising (a) coating a formulated compound to constitute a film on a double sided silicone resin coated substrate, wherein said formulated compound is made by combination of thermoplastic acrylic polymer with a vinylic copolymer in ratios of 10:3 to 10:1 to form a paste in regular aromatic solvent; (b) coating of high tack adhesive on double sided silicone resin coated substrate and then laminating the said film formed in the step (a) to this adhesive to get the "heat sensitive, solvent sensitive, tamper evident multi purpose security label"; and (c) slitting the said formulated label in desired length and size.

In another embodiment, the invention relates to a "heat sensitive, solvent sensitive, tamper evident multi purpose security label" comprising a tamper evident, heat sensitive, solvent sensitive film layer, a high tack adhesive layer, and a double sided silicone resin coated substrate, wherein the film comprises a formulated compound made by combination of thermoplastic acrylic polymer with a vinylic copolymer in ratios of 10:3 to 10:1 to form a paste in regular aromatic solvent.

Said high tack adhesive is preferably made by blending (a) natural rubber and/or synthetic rubbers, (b) tackifiers such as hydrocarbon resins, rosin and rosin derivatives, polyterpenes, coumarone-indene resins, or any compatible conventional tackifier or mixtures thereof, (c) antioxidants; and (d) mineral oils, which are used as plasticizers; followed by solvating with hydrocarbon / aromatic solvents to form a compound of proper consistency to facilitate coating and texture commensurate to the coating equipment.

The present invention relates to the development and a process of manufacturing of tamper evident, destructible with temperature and solvent sensitive (destructible) film having the inherent property of exhibiting different coloured glow when exposed to UV light or optionally in-built silver/bronze or other sparkling colour. This film is print-receptive and can be easily printed with water based printing inks, or invisible and other security inks available in the market.

This product is formulated by a combination of thermoplastic acrylic polymer with a vinylic copolymer in ratios of 10:3 to 10:1 to form a paste made in regular aromatic solvent. This paste is coated on a double sided silicone resin coated substrate by conventional method of coating equipment to form a uniform film. The film formed thereafter has a thickness of 80 to 115 microns. The film has a special property of being strong enough to facilitate dispensing it in its final (label) form and at the same time strength low enough to prevent its removal from the substrate without tearing in the end product form. This film is coated with a special high tack adhesive by the transfer adhesive technique to convert the film into a self-adhesive which forms the basic raw material for the manufacturing of the said tamper evident, destructible with heat and solvent destructible labels. For achieving this the high tack adhesive is coated on double sided silicone resin coated substrate and laminated with the said film. The double sided silicone resin coated substrate utilized for the first step of film forming is removed by rewinding the stock on the mechanical rewinder to get the heat sensitive, solvent sensitive, tamper evident multi purpose security label (SURECOM).

The process of applying the high tack adhesive is by conventional method of coating equipment followed by using known drying-methods. This special high tack adhesive is capable of adhering to regular substrates as well as low energy surfaces like polypropylene polyethylene etc. The special high tack adhesive is manufactured by blending various materials comprising natural and/or synthetic rubbers, tackifying resins of natural/synthetic type, antioxidants followed by solvating with hydrocarbon/aromatic solvents to form a compound of proper consistency to facilitate coating and texture commensurate to the coating equipment. This special high tack adhesive of the present invention includes a tackifier which can be formed of hydrocarbon resins, rosin and rosin derivatives, polyterpenes, coumarone-indene resins, any compatible conventional tackifier or mixtures thereof along with mineral oils which are used as plasticizers.

The material used for the double sided silicone resin coated substrate could be papers like Glassine, Kraft or polymeric films like Polyester, Polyethylene, Polyvinyl Chloride etc or polycoated papers.

The stock formed herewith utilizing the aforesaid technique and ingredients is utilized as the basic raw material which goes into the making of the novel labels. For achieving this, the heat sensitive, solvent sensitive, tamper evident multi purpose Security Label (SURECOM) is slit in to the desired width.

The following is the schematic representation of the construction of the heat sensitive, solvent sensitive, tamper evident multi purpose Security Label (SURECOM):
FFFFFFFFFFFFFFF - Tamper evident, heat sensitive, solvent sensitive film.
AAAAAAAAAAAAAA-High tack adhesive
LLLLLLLLLLLLLLLL-Double sided Silicone resin coated substrate

## Claims

1. A method of manufacturing "heat sensitive, solvent sensitive, tamper evident multi purpose security label (SURECOM)" comprising the following:
(a) coating a formulated compound to constitute a film on a double sided silicone resin coated substrate, wherein said formulated compound is made by combination of thermoplastic acrylic polymer with a vinylic copolymer in ratios of 10:3 to 10:1 to form a paste in regular aromatic solvent;
(b) coating of high tack adhesive on double sided silicone resin coated substrate and then laminating the said film formed in the step 1(a) to this adhesive to get the "heat sensitive, solvent sensitive, tamper evident multi purpose security label"; and
(c) slitting the said formulated label in desired length and size.

2. A "heat sensitive, solvent sensitive, tamper evident multi purpose security label" comprising a tamper evident, heat sensitive, solvent sensitive film layer, a high tack adhesive layer, and a double sided silicone resin coated substrate, wherein the film comprises a formulated compound made by combination of thermoplastic acrylic polymer with a vinylic copolymer in ratios of 10:3 to 10:1 to form a paste in regular aromatic solvent.

3. A "heat sensitive, solvent sensitive, tamper evident multi purpose security label" according to claim 2, wherein the said high tack adhesive is made by blending (a) natural rubber and/or synthetic rubbers, (b) tackifiers such as hydrocarbon resins, rosin and rosin derivatives, polyterpenes, coumarone-indene resins, or any compatible conventional tackifier or mixtures thereof, (c) antioxidants; and (d) mineral oils, which are used as plasticizers; followed by solvating with hydrocarbon / aromatic solvents to form a compound of proper consistency to facilitate coating and texture commensurate to the coating equipment.

4. A "heat sensitive, solvent sensitive, tamper evident multi purpose security label" according to claim 2, wherein the said substrate could be papers like Glassine, Kraft or polymeric films like Polyester, Polyethylene, Polyvinyl Chloride or polycoated papers.

## Patentansprüche

1. Verfahren zur Herstellung eines "wärmeempfindlichen, lösungsmittelempfindlichen Mehrzwecksicherheitsetiketts, das unerlaubtes Manipulieren offenkundig anzeigt (SURECOM)", umfassend die folgenden Schritte:
a) Aufbringen einer formulierten Verbindung zur Bildung eines Films auf einem doppelseitigen, Silikonharz-beschichteten Substrat, wobei die formulierte Verbindung durch Kombination von thermoplastischem Acrylpolymer mit einem Vinylcopolymer im Verhältnis von 10:3 bis 10:1 hergestellt wird, um in einem üblichen aromatischen Lösungsmittel eine Paste zu bilden;
b) Aufbringen eines Klebers mit hohem Tack auf ein doppelseitiges, Silikonharz-beschichtetes Substrat und anschließendes Laminieren des in Schritt 1 (a) gebildeten Films auf diesen Kleber, um ein "wärmeempfindliches, lösungsmittelempfindliches Mehrzwecksicherheitsetikett, das unerlaubtes Manipulieren offenkundig anzeigt" zu erhalten und
c) Längsschneiden des formulierten Etiketts in die gewünschte Länge und Größe.

2. "Wärmeempfindliches, lösungsmittelempfindliches Mehrzwecksicherheitsetikett, das unerlaubtes Manipulieren offenkundig anzeigt", umfassend eine wärmeempfindliche, lösungsmittelempfindliche Filmschicht, die unerlaubtes Manipulieren offenkundig anzeigt, und ein doppelseitiges, Silikonharz-beschichtetes Substrat, wobei der Film eine formulierte Verbindung umfasst, die durch Kombination von thermoplastischem Acrylpolymer mit einem Vinylcopolymer im Verhältnis von 10:3 bis 10:1 hergestellt ist, um in einem üblichen aromatischen Lösungsmittel eine Paste zu bilden.

3. "Wärmeempfindliches, lösungsmittelempfindliches Mehrzwecksicherheitsetikett, das unerlaubtes Manipulieren offenkundig anzeigt" nach Anspruch 2, wobei der Kleber mit hohem Tack durch Mischen von (a) Naturkautschuk und/oder synthetischen Kautschuken, (b) Tackifiern wie z. B. Kohlenwasserstoffharzen, Kolophonium und Kolophoniumderivaten, Polyterpenen, Kumaron-Indenharzen oder einem beliebigen kompatiblen herkömmlichen Tackifier oder Mischungen davon, (c) Antioxidanzien und (d) Mineralölen, die als Weichmacher verwendet werden, hergestellt wird, gefolgt von Solvatisieren mit Kohlenwasserstoff / aromatischen Lösungsmitteln, um eine Verbindung von geeigneter Konsistenz zu bilden, um das Aufbringen und Texturieren entsprechend der Beschichtungseinrichtung zu erleichtern.

4. "Wärmeempfindliches, lösungsmittelempfindliches Mehrzwecksicherheitsetikett, das unerlaubtes Manipulieren offenkundig macht" nach Anspruch 2, wobei das Substrat Papier wie Pergamin, Kraftpapier oder polymere Filme wie Polyester, Polyethylen, Polyvinylchlorid oder polycoated Papier sein kann.

## Revendications

1. Méthode de fabrication d'une « étiquette de sécurité polyvalente sensible à la chaleur, sensible aux solvants, inviolable (SURECOM) » comprenant les étapes suivantes :
a) revêtement d'un compose formulé afin de constituer un film sur un substrat revêtu de résine silicone à double face, dans lequel ledit composé formulé est fabriqué par combinaison d'un polymère acrylique thermoplastique avec un copolymère vinylique en rapports de 10:3 à 10:1 pour former une pâte dans un solvant aromatique régulier ;
b) revêtement d'adhésif haute performance sur un substrat revêtu de résine silicone à double face, puis laminage dudit film formé à l'étape 1 (a) à cet adhésif afin d'obtenir « l'étiquette de sécurité polyvalente sensible à la chaleur, sensible aux solvants, inviolable » ; et
c) fente de ladite étiquette formulée en longueur et taille désirées.

2. « Etiquette de sécurité polyvalente sensible à la chaleur, sensible aux solvants, inviolable » comprenant une couche film inviolable, sensible à la chaleur, sensible aux solvants, une couche adhésive à forte adhérence, et un substrat revêtu de résine silicone à double face, où le film comprend un composé formulé fabriqué par combinaison d'un polymère acrylique thermoplastique avec un copolymère vinylique en rapports de 10:3 à 10:1 pour former une pâte dans un solvant aromatique régulier.

3. « Etiquette de sécurité polyvalente sensible à la chaleur, sensible aux solvants, inviolable » selon la revendication 2, où ledit adhésif à haute adhérence est fabriqué par mélange (a) de caoutchouc naturel et/ou caoutchoucs synthétiques, (b) d'agents d'adhésivité comme les résines d'hydrocarbures, colophanes et dérivés de colophane, polyterpènes, résines de coumarone-indène, ou tout agent d'adhésivité conventionnel compatible ou des mélange de ces derniers, (c) d'antioxydants ; et (d) d'huiles minérales qui sont utilisées comme plastifiants ; suivi par solvatation avec des solvants hydrocarbures / aromatiques pour former un composé de consistance appropriée pour faciliter le revêtement et la texture conformément à l'équipement de revêtement.

4. « Etiquette de sécurité polyvalente sensible à la chaleur, sensible aux solvants, inviolable » selon la revendication 2, où ledit substrat pourrait être des papiers comme le papier cristal, le papier kraft ou des films polymériques comme le polyester, le polyéthylène, le chlorure de polyvinyle ou des papiers polyrevêtus.
